(19) Europäisches Patentamt
European Patent Office
Office européen des brevets

(11) **EP 3 252 563 B1**

(12) **FASCICULE DE BREVET EUROPEEN**

(45) Date de publication et mention de la délivrance du brevet:
**10.01.2024 Bulletin 2024/02**

(51) Classification Internationale des Brevets (IPC):
**G06F 1/16** *(2006.01)*    **G06F 3/01** *(2006.01)*
**H04M 1/72454** *(2021.01)*    **G06F 18/2413** *(2023.01)*

(21) Numéro de dépôt: **17173300.9**

(22) Date de dépôt: **29.05.2017**

(52) Classification Coopérative des Brevets (CPC):
**G06F 1/1694; G06F 3/017; G06F 18/2413;**
**H04M 1/72454;** G06F 2218/12; G06N 3/045

(54) **DÉTERMINATION D'UN CONTEXTE DE MOBILITÉ D'UN UTILISATEUR PORTEUR D'UN ÉQUIPEMENT MUNI DE CAPTEURS INERTIELS**

BESTIMMUNG EINES MOBILITÄTSKONTEXTES EINES NUTZERS EINES TRAGBAREN GERÄTS, DAS MIT TRÄGHEITSSENSOREN AUSGESTATTET IST

METHOD FOR DETERMINING A MOBILITY CONTEXT OF A USER CARRYING A DEVICE PROVIDED WITH INERTIAL SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.05.2016 FR 1654859**

(43) Date de publication de la demande:
**06.12.2017 Bulletin 2017/49**

(73) Titulaire: **Orange**
**92130 Issy-les-Moulineaux (FR)**

(72) Inventeur: **LEFEBVRE, Grégoire**
**38920 Crolles (FR)**

(56) Documents cités:
**EP-A2- 2 821 893**

- **TAIWOO PARK ET AL: "E-Gesture: A Collaborative Architecture for Energy-efficient Gesture Recognition with Hand-worn Sensor and Mobile Devices", PROCEEDINGS OF THE 9TH ACM CONFERENCE ON EMBEDDED NETWORKED SENSOR SYSTEMS, SENSYS '11, 1 novembre 2011 (2011-11-01), pages 260-273, XP055345254, New York, New York, USA DOI: 10.1145/2070942.2070969 ISBN: 978-1-4503-0718-5**
- **Jiahui Wu ET AL: "Gesture Recognition with a 3-D Accelerometer" In: "LECTURE NOTES IN COMPUTER SCIENCE", 7 juillet 2009 (2009-07-07), Springer Berlin Heidelberg, Berlin, Heidelberg, XP055142497, ISSN: 0302-9743 ISBN: 978-3-54-045234-8 vol. 5585, pages 25-38, DOI: 10.1007/978-3-642-02830-4_4, * section 2.1 ***

**Description**

La présente invention se rapporte au domaine des mesures de données inertielles d'un équipement muni de capteurs inertiels suite à l'exécution d'un geste avec cet équipement. Plus particulièrement, l'invention se rapporte à la détection d'un contexte de mobilité d'un utilisateur porteur de ce type d'équipement par l'analyse de telles mesures.

De nombreux services sont de nos jours proposés sur les équipements de type téléphone intelligent (« smartphone » en anglais), montre connectée, lunette connectée, etc..., en utilisant des capteurs inertiels (accéléromètre, gyromètre, magnétomètre, ...) aptes à mesurer différents type de mouvement. Les données inertielles issues de ces capteurs servent par exemple à déterminer l'exécution d'un geste effectué par un utilisateur avec l'équipement. Un tel geste peut être effectué en 2D, c'est-à-dire par exemple sur un écran de l'équipement par l'exécution d'un dessin ou d'une écriture ou en 3D par un geste réalisé dans l'air par l'utilisateur porteur de cet équipement.

Généralement, ces gestes sont reconnus par comparaison des caractéristiques issues de mesures physiques collectées par les capteurs inertiels avec celles de modèles prédéfinis.

Cependant, du fait du caractère mobile de l'équipement, l'utilisateur est amené à exécuter ces gestes dans des situations de contexte différentes et selon une mobilité différente. Ces situations différentes de mobilité peuvent dégrader l'analyse des données inertielles qui sont mesurées et par la même la détection des gestes qui ont été effectués avec l'équipement.

Par exemple, l'action de secouer un téléphone mobile est plus ou moins reconnue si l'utilisateur qui effectue ce geste est à la maison, dans un bus, un ascenseur ou dans un autre environnement. L'analyse des données peut également être différente selon que la mobilité de l'utilisateur est faible ou grande, par exemple lorsqu'il marche, qu'il court ou qu'il saute.

Les méthodes de l'état de l'art utilisent des données de capteurs différents que les capteurs inertiels pour déterminer le contexte dans lequel se trouve l'utilisateur. Par exemple, dans la demande de brevet US2009/0037849, des capteurs de température, optiques, acoustiques, de lumière peuvent être utilisés pour déterminer le contexte ou plus exactement la situation dans laquelle se trouve l'utilisateur, par rapport à des situations prédéfinies. De nombreux autres systèmes utilisent les données GPS pour déterminer un lieu et donc un contexte préenregistré (au travail, à la maison, etc.). TAIWOO PARK et al, 'E-Gesture: A Collaborative Architecture for Energy-efficient Gesture Recognition with Hand-worn Sensor and Mobile Devices', in : ACM, CONFERENCE ON EMBEDDED NETWORKED SENSOR SYSTEMS, SENSYS '11. Édité par Association for Computing Machinery, New York, p. 260-273 divulgue une méthode pour détecter à la fois le contexte de mobilité et un geste à l'aide de capteurs inertiels.

Enfin, d'autres systèmes présentent à l'utilisateur sur une interface, différents contextes ou situations à sélectionner parmi une liste prédéfinie, avant de mettre en oeuvre une détection de geste sur l'équipement.

Ces systèmes nécessitent une multitude de capteurs ou de moyens de mesure qui encombrent et complexifient les équipements mobiles.

Ils demandent une connaissance a priori d'une liste de contextes ou de situations prédéfinies qui n'est pas nécessairement adaptée à toutes les situations.

La sélection d'un contexte parmi une pluralité de contextes n'est pas aisée pour l'utilisateur qui a quelquefois du mal à définir son contexte (est-il en mouvement lent, rapide ?), d'autant plus que sa situation peut évoluer au cours du temps.

Ainsi, il existe un besoin de pouvoir détecter automatiquement un contexte de mobilité de façon suffisamment précise avec une moindre complexité et des mesures limitées.

La présente invention vient améliorer la situation.

La présente invention est définie par les revendications indépendantes. Les revendications dépendantes définissent des modes de réalisation particuliers de l'invention.

Elle propose à cet effet, un procédé de détermination d'un contexte de mobilité d'un utilisateur porteur d'un équipement muni de capteurs inertiels. Le procédé est défini à la revendication indépendante 1.

Ainsi, l'exécution d'un geste de référence avec l'équipement permet d'obtenir des données inertielles issues de capteurs inertiels qui sont ensuite analysées afin de déterminer un contexte de mobilité grâce à une mise en correspondance avec des données inertielles enregistrées et apprises pour ce même geste de référence.

Par contexte de mobilité, on entend aussi bien le contexte de mobilité de l'utilisateur, par exemple s'il est statique, s'il marche, s'il court, ou si de façon générale il est en action, que le contexte de mouvement qui l'entoure comme par exemple le mouvement du vélo vers l'avant ou dans les virages, le mouvement d'un bateau, d'une voiture, c'est-à-dire la situation où il exécute son action. Bien sûr, le contexte de mobilité peut également comprendre une association de ces deux types de contexte, action et mouvement comme par exemple lorsque l'utilisateur marche dans un bus en mouvement ou s'il regarde sa montre à vélo.

L'exécution du geste de référence permet ainsi d'initier le système de reconnaissance et de déterminer dans quel contexte est l'utilisateur. Cette connaissance du contexte de mobilité peut permettre d'adapter les services proposés sur l'équipement ou bien l'interface à ce contexte de mobilité. L'exécution de ce geste est généralement plus simple qu'une sélection dans une liste prédéfinie de contexte, surtout lorsque l'utilisateur est précisément en mouvement. De plus, l'utilisateur n'a pas à réfléchir pour savoir quel contexte ou quel type de mouvement il est en train d'exécuter, le procédé mis en oeuvre le fait à sa place.

Les différents modes particuliers de réalisation mentionnés ci-après peuvent être ajoutés indépendamment ou en combinaison les uns avec les autres, aux étapes du procédé de détermination défini ci-dessus.

Dans un mode de réalisation particulier, la détermination du contexte de mobilité comporte la détermination d'un degré de mobilité.

La méthode permet d'obtenir une précision sur le degré de mobilité que peut avoir l'utilisateur. En effet, différents degrés de mobilité comme « non mouvant », « peu mouvant », « moyennement mouvant » « très mouvant », « extrêmement mouvant » peuvent par exemple être définis et ainsi déterminés suite à l'exécution du geste de référence.

Ceci permet donc d'apporter une précision à la détermination du contexte de mobilité et donc d'utiliser cette précision pour offrir des services adaptés à l'utilisateur. En effet, un contexte de mobilité dans la catégorie « extrêmement mouvant » par exemple, peut le restreindre dans ses possibilités d'interaction.

Dans une implémentation particulière, une fragmentation est appliquée aux données inertielles mesurées pour obtenir une pluralité de signaux correspondants à différents degrés de mobilité à détecter.

Cette fragmentation permet d'obtenir une pluralité de signaux qui peuvent être comparés à plusieurs fragments ou segments de différentes bases de données comportant des données apprises pour différents degrés de mobilité.

Dans un mode de réalisation particulier, la détermination du contexte de mobilité est associée à une mesure de confiance de la décision.

Cette mesure de confiance permet de définir un seuil pour lequel une décision de degré de mobilité peut être prise. Ainsi, la décision sur le contexte de mobilité est plus fiable.

Dans une réalisation avantageuse, les données inertielles préenregistrées sont dans une base de connaissance alimentée par apprentissage du geste de référence selon différents contexte de mobilité et suite à la détermination du contexte de mobilité, la base de connaissance est alimentée par les mesures inertielles obtenues pour ce contexte de mobilité déterminé.

La base de connaissance qui permet de retrouver le contexte de mobilité et son degré est ainsi alimentée périodiquement et enrichie au fur et à mesure des mesures effectuées. Elle devient alors de plus en plus fiable et évolue pour prendre en compte de nouvelles données de mobilité.

La présente invention vise également un équipement muni de capteurs inertiels apte à déterminer un contexte de mobilité d'un utilisateur porteur de l'équipement. L'équipement est défini à la revendication 6.

La présente invention vise également un terminal comportant un équipement tel que décrit.

La présente invention vise aussi un système apte à déterminer un contexte de mobilité d'un utilisateur porteur d'un équipement muni de capteurs inertiels. Le système est défini à la revendication 8. Cet équipement, ce terminal ou le système présentent les mêmes avantages que le procédé décrit précédemment, qu'ils mettent en oeuvre.

L'invention vise un programme informatique comportant des instructions de code pour la mise en oeuvre des étapes du procédé de détermination tel que décrit, lorsque ces instructions sont exécutées par un processeur.

Enfin l'invention se rapporte à un support de stockage, lisible par un processeur, intégré ou non à l'équipement ou au dispositif, éventuellement amovible, sur lequel est enregistré un programme informatique comprenant des instructions pour l'exécution des étapes du procédé tel que décrit précédemment.

D'autres caractéristiques et avantages de l'invention apparaîtront plus clairement à la lecture de la description suivante, donnée uniquement à titre d'exemple non limitatif, et faite en référence aux dessins annexés, sur lesquels :

- la figure 1 illustre un exemple de système comportant un équipement et mettant en oeuvre l'invention, selon un mode de réalisation ;
- la figure 2 illustre sous forme d'organigramme, les étapes d'un procédé de détermination d'un contexte de mobilité selon un mode de réalisation de l'invention ;
- la figure 3 illustre une représentation matérielle d'un équipement mettant en oeuvre l'invention, dans un mode de réalisation ;
- la figure 4 illustre une représentation matérielle d'un dispositif ou serveur mettant en oeuvre l'invention, dans un mode de réalisation ;
- la figure 5 illustre des successions de points dans l'espace, avant et après traitement, lors de l'exécution d'un geste de référence pour deux contextes différents de mobilité ;
- la figure 6 illustre une représentation d'un réseau de neurones utilisé dans un mode de réalisation de l'invention ; et
- la figure 7 représente un tableau de valeurs donnant les résultats de taux de classification de geste de référence pour 10 expérimentations du procédé selon l'invention.

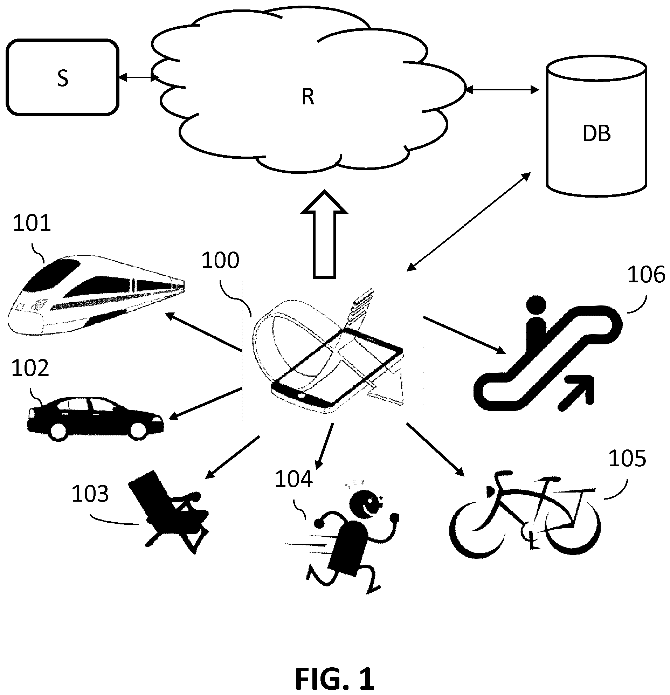

La **figure 1** illustre de façon schématique différentes situations dans laquelle peut se trouver un utilisateur porteur d'un équipement 100 illustré ici par un téléphone mobile. L'utilisateur porteur de ce téléphone effectue un geste de référence avec l'équipement, par exemple un geste avec son terminal en main dans l'espace d'interaction tridimensionnelle dont la trajectoire est similaire au symbole infini, comme illustré sur la figure.

D'autres gestes peuvent être définis, par exemple, le dessin d'un coeur ou d'une lettre, d'une figure géométrique, etc.... Le terminal peut ne pas être pris en main et peut par exemple être accroché au poignet de l'utilisateur s'il s'agit d'une montre connectée, être situé sur un objet connecté accroché à une chaussure, le geste s'effectuant alors avec le pied.

L'utilisateur peut effectuer ce geste dans des situations de mobilité différentes. Il peut en effet être dans un moyen de transport de type train (101), voiture (102), vélo (105). Il peut être lui-même en mouvement en marchant ou en courant (104), dans un escalier mécanique (106) ou tout autre contexte de mobilité, voire une association de contexte de mobilité, par exemple s'il marche dans un train. Il peut bien évidemment être au repos et simplement assis (103). Son contexte de mobilité peut alors être défini comme étant « non mouvant ».

Dans les autres situations données en exemple précédemment, le contexte de mobilité peut passer de « non mouvant » à « peu mouvant », « moyennement mouvant » « très mouvant », etc...

Différents degrés peuvent ainsi être associés au contexte de mobilité, apportant ainsi une précision différente. On peut en effet, catégoriser le contexte de mobilité en plusieurs catégories. Dans un cas simple, deux catégories peuvent être définies : « non mouvant » et « mouvant ». Dans l'exemple de réalisation donné ici, on définit 5 catégories : « non mouvant », « peu mouvant », « mouvant », « très mouvant » et « extrêmement mouvant ». Bien évidemment d'autres degrés de mobilités peuvent être définis et d'autres dénominations peuvent être associées à ces catégories.

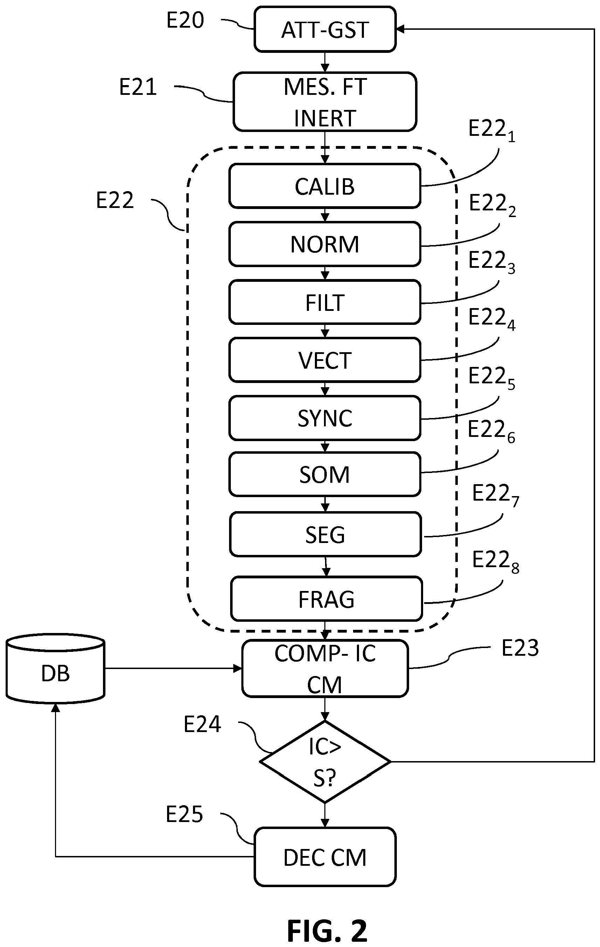

Dans la configuration illustrée à la figure 1, le terminal 100 communique à travers un réseau de communication R vers un serveur S qui peut, dans un mode de réalisation mettre en oeuvre l'analyse des données inertielles issues de capteurs présents sur le terminal et mesurées lors de l'exécution du geste de référence tel que décrit. Le procédé mis en oeuvre sera décrit plus en détails en référence à la figure 2.

L'analyse de ces données inertielles repose sur une comparaison avec d'autres données inertielles prises lors de l'exécution de ce même geste de référence et enregistrées dans une base de données DB qui peut être disponible sur le réseau de communication. Cette base de données peut comporter des données qui ont été mesurées par le terminal de l'utilisateur pour différentes situations de mobilité. Elle peut également comporter des données en provenance d'autres terminaux appartenant au même utilisateur mais aussi à d'autres utilisateurs qui effectuent le même geste de référence dans des situations de mobilité différentes. Ainsi, la base de données disponible sur le réseau est enrichie par des sources différentes.

Cependant, dans un autre mode de réalisation, cette base de données est intégrée à l'équipement 100. Dans ce cas, le procédé mis en oeuvre et détaillé en référence à la figure 2 est exécuté sur l'équipement sans qu'il n'y ait besoin de communication vers le réseau. Les données enregistrées dans la base de données sont donc celles de l'équipement pour le geste de référence défini, effectué sur cet équipement et dans des situations de mobilité différentes.

Ainsi, en référence à la **figure 2**, on décrit à présent les étapes d'un procédé de détermination d'un contexte de mobilité selon un mode de réalisation de l'invention. Ce procédé peut être exécuté sur l'équipement lui-même ou par un serveur d'un réseau de communication.

A l'étape E20, l'équipement 100 est en veille active et attend l'exécution d'un geste de référence avec l'équipement. Le contexte de mobilité CM est initialisé à un contexte de mobilité par défaut, dans l'exemple ici, à la valeur « non mouvant ».

Lorsque l'utilisateur effectue son geste de référence, comme par exemple le symbole infini en 3D, équipement en main, un ensemble de capteurs inertiels de l'équipement donne des mesures en E21, prises pendant une fenêtre temporelle d'analyse qui peut être définie de longueur différente en fonction de la précision qu'on veut apporter à l'analyse. Dans un exemple de réalisation, cette fenêtre temporelle est de 500ms. Cette fenêtre temporelle est aussi définie en fonction de données préenregistrées dans la base de données DB pour le même geste de référence et pour des contextes de mobilité différents lors d'une phase d'apprentissage par exemple.

L'ensemble de capteurs inertiels peut comporter un ou plusieurs capteurs inertiels, par exemple un accéléromètre, un gyromètre ou encore un magnétomètre.

Ainsi, le terminal obtient des données d'accélération selon 3 axes à partir de l'accéléromètre, des données de vitesse angulaire représentatives de rotations subies par le terminal selon 3 axes par le gyromètre, et des données issues du magnétomètre adapté pour déterminer l'orientation du terminal par rapport à un champ magnétique, et en particulier par rapport au champ magnétique terrestre.

On décrit ici les mesures de trois capteurs inertiels. Les mesures d'un seul capteur inertiel peuvent cependant être suffisantes pour mettre en oeuvre l'invention.

Une étape E22 de traitement des données inertielles issues de ces capteurs peut être prévue. Ainsi, une étape $E22_1$ effectue une calibration des informations capturées par les capteurs. La calibration peut être réalisée en corrigeant les mesures obtenues par les capteurs avec une valeur d'écart par rapport à un référentiel invariable et commun à d'autres terminaux. Par exemple, la valeur de l'écart peut être calculée par une différence entre une valeur de référence et les valeurs obtenues par les capteurs lorsque le terminal est dans une position de repos. Cette étape de calibration peut être utile lorsque les données enregistrées dans la base de données proviennent de terminaux différents. En effet, en fonction des terminaux, les capteurs varient en précision, en fréquence d'échantillonnage, etc...

Une étape $E22_2$ de normalisation est mise en oeuvre en effectuant un changement d'échelle de valeur pour ramener les valeurs des signaux vers un intervalle [0 ;1].

Afin de réduire le bruit qui peut perturber les données et rendre les caractéristiques des données saillantes pour les 5 contextes de mobilité définis, des techniques de traitement de signal peuvent être appliqués. Ainsi, en $E22_3$, un filtrage passe-bas est effectué pour filtrer les hautes fréquences et éliminer cette source de bruit dans les données.

En $E22_4$, une étape de vectorisation des signaux est effectuée. Cette étape sert à simplifier les signaux captés en éliminant des échantillons de signal capté par un capteur, non caractéristiques des signaux. Si on s'autorise par exemple une erreur locale de 0.1, cela signifie que si deux échantillons ont une distance euclidienne inférieure à 0.1 alors le deuxième échantillon peut être supprimé sans incidence sur l'information apportée. Un exemple d'une telle méthode d'approximation est décrite dans l'article intitulé « On the Approximation Of Curves By Line Segments Using Dynamic Programming-II » publié en février 1962 par Richard Bellman et Bella Kotkin dans le cadre de « United States Air force Project Rand ».

Une étape $E22_5$ effectue une synchronisation des informations des différents capteurs inertiels. Dans un exemple de réalisation, la synchronisation peut se faire par ré-échantillonnage des données capteur par capteur. Les données issues des capteurs sont par exemple échantillonnées à une fréquence suffisamment élevée pour que le jeu de données soit représentatif du tracé, mais suffisamment basse pour que ces données puissent être traitées par un terminal mobile. Par exemple, une fréquence d'échantillonnage de 100 Hertz permet d'obtenir une résolution du signal satisfaisante sans toutefois produire une quantité trop importante de données.

Une étape $E22_6$ réalise une fusion des signaux par concaténation ou par calcul d'une moyenne des données synchronisées. Ces données sont par exemple concaténées échantillon par échantillon. Par exemple, si { acc_x(t), acc_y(t), acc_z(t) } sont les valeurs issues du capteur d'accélération, { gyro_x(t), gyro_y(t), gyro_z(t) } les valeurs issues du capteur gyromètre de vitesse angulaire, et { mag_x(t), mag_y(t), mag_z(t) } les valeurs du champ magnétique mesurées par un capteur de champ magnétique, alors le résultat de la fusion est un vecteur à 9 dimensions noté { acc_x(t), acc_y(t), acc_z(t), gyro_x(t), gyro_y(t), gyro_z(t), mag_x(t), mag_y(t), mag_z(t) }, c'est à dire qu'à chaque période de temps, le procédé considère un vecteur à 9 dimensions. Ainsi les valeurs des différents capteurs sont regroupées pour être prises en considération de manière dépendante et non pas indépendante.

Une segmentation temporelle est effectuée en $E22_7$, afin de supprimer les échantillons correspondant aux début et fins de geste qui ne sont pas significatifs. Dans un exemple d'implémentation. La puissance efficace des signaux est calculée de la façon suivante : $P=(x^2+y^2+z^2)^2$, x, y, z représentant les 3 axes de mesures. Un seuil est ensuite défini pour marquer le début et la fin d'un segment temporel porteur de sens. Si la puissance efficace est inférieure à ce seuil le signal n'a pas beaucoup d'énergie, cela révèle alors qu'il n'y a pas non plus d'information saillante. Lorsque la valeur est supérieure au seuil, l'information caractérisée par le signal est donc caractéristique.

Enfin, une fragmentation des signaux est effectuée en $E22_8$ où une subdivision des signaux en fragments de même taille est réalisée en utilisant si besoin une technique de ré-échantillonnage. Dans un exemple d'implémentation, on fragmente le signal en 5 segments. Bien évidemment, un autre nombre de segments peut être choisi en fonction de la précision que l'on veut obtenir.

Pour un signal de 500ms, on peut ainsi le fragmenter en segments de 100ms. Cela permet d'obtenir une décomposition du geste de référence et donc une précision plus importante lors de la comparaison de ce segment à d'autres segments préenregistrés dans la base de données. En effet, la fragmentation ou segmentation du geste permet de comparer des portions plus précises des mesures de ce segment de geste et avec des mesures de même portion de geste dans la base de données.

Après l'obtention de ces 5 fragments de signaux, ceux-ci sont comparés en E23 à des signaux préenregistrés dans une base de données d'apprentissage DB qui comporte 5 catégories de données selon les 5 degrés de contexte de mobilité et pour un geste de référence. Ces données ont été enregistrées, par exemple lors d'une phase de configuration où le geste de référence a été effectué pour les 5 différents contextes de mobilité puis ensuite, au fur et à mesure des reconnaissances de contexte effectuées.

Lors de cette étape de comparaison, le contexte de mobilité le plus probable est déterminé et un indice de confiance IC de cette détermination est défini.

Dans un exemple de réalisation, cette étape est effectuée par une classification supervisée par réseau de neurones comme par exemple la méthode MLP (pour « Multi-Layer Perceptron » en anglais). Cette méthode donne en sortie une valeur entre 0 et 1 pour chaque contexte de mobilité. La valeur maximale correspond au contexte le plus probable et donne un indice de confiance sur la décision. Par exemple, si cet indice de confiance est supérieur à 0.95, cela veut dire que la confiance sur le contexte choisi est très grande alors que si l'indice de confiance est de 0.20, la confiance sur le contexte choisi est très faible.

Dans un mode particulier de réalisation, l'étape E23 est effectuée par une méthode basée sur les réseaux siamois SNN (pour « Siamese Neural Network » en anglais). Un exemple d'une telle méthode est décrit dans le document intitulé « Signature Vérification using a « Siamese » Time Delay Neural Network » des auteurs Jane Bromley, Isabelle Guyon, Yann LeCun, Eduard Säckinger et Roopak Shah dans NIPS Proc, 1994.

Ces réseaux cherchent par un processus d'apprentissage à modéliser la similarité entre les gestes/actions/activités d'une même classe (ici toute une série de gestes de référence décrivant un contexte, par exemple « extrêmement mouvant ») et les dissimilarités avec les autres classes (ici de contexte).

Selon le document cité de Bromley et al., l'apprentissage neuronal s'effectue par l'algorithme de descente de gradient cherchant à minimiser la fonction objective suivante :

$$E_W(X1, X2, Y) = (tX1X2(Y) - \cos(O_{X1}, O_{X2}))^2,$$

avec X1 et X2 deux exemples à apprendre et Y le label de ressemblance ($tX1X2(Y) = 1$ pour la similarité et -1 pour la dissimilarité), $O_{X1}$ et $O_{X2}$ les sorties du réseaux siamois pour les exemples X1 et X2.

Une fois, l'apprentissage SNN achevé, le vecteur de sortie $O_X$ pour une entrée de test X est un vecteur caractéristique qui peut être comparé aux sorties $O_{X1}$, $O_{Xn}$ de tous les exemples d'apprentissage pour déterminer la classe de X comme étant celle de l'exemple d'apprentissage le plus proche au sens d'une distance cosinus.

Cette méthode suppose que les vecteurs d'entrée du réseau SNN soit de taille fixe. Nous choisissons de fragmenter les informations des gestes de référence à apprendre par classe de contexte (par exemple 100 ms). Supposons que le geste produit en $E22_8$ soit de 500ms, nous disposons de 5 segments temporels. En phase d'apprentissage, nous aurons donc 5x5 classes à modéliser : le 1er segment de la classe « non mouvant », le 2nd segment de la classe « pas mouvant », etc. jusqu'au 5ème segment de la classe « extrêmement mouvant ».

En phase de test, une comparaison (au sens de la distance cosinus et des k plus proches voisins) des sorties SNN des 5 segments de tests aux sorties respectives des segments d'apprentissage des contextes de mobilité est effectuée. Chaque segment est labellisé avec le nom d'une classe gagnante. Le geste de test est alors classé par vote majoritaire sur ces 5 segments. On garde l'information sur les votes comme mesure de confiance (i.e. 3 votes pour la classe « non mouvant » correspondent à une mesure de confiance ou indice de confiance de 3/5).

En E24, si les segments caractéristiques ne sont pas reconnus (c'est-à-dire que l'indice de confiance obtenu ne dépasse pas un seuil fixé), le système en est informé, et garde son statut de contexte de mobilité inchangé. Si un ou plusieurs segments caractéristiques sont reconnus (la plus haute mesure de confiance du classificateur est suffisante en fonction du seuil prédéfini et est en adéquation avec l'historique des contextes précédemment reconnues), le statut du contexte de mobilité est identifié en E25 et enregistré.

Dans un exemple d'implémentation possible, de façon à ce que l'utilisateur n'ait pas à faire son geste de référence plusieurs fois, un seuil de l'ordre de 0.7 peut être choisi. En fonction des applications recherchée, cette valeur peut être augmentée ou diminuée selon la précision voulue.

Ce contexte de mobilité CM pourra être utilisé par exemple pour adapter des services sur le terminal. En effet, selon que l'utilisateur est en contexte de mobilité « extrêmement mouvant » ou « non mouvant », il ne pourra pas effectuer les mêmes actions sur son terminal. L'interface pourra être adaptée pour recevoir les informations vocalement si le contexte est « extrêmement mouvant » plutôt que textuellement si le contexte est « non mouvant ».

Cette information de contexte alimente en E25 la base de données DB qui comporte une base de connaissance pour archiver l'historique des contextes. Cet historique permet de favoriser les situations de contextes de mobilité dans lesquelles l'utilisateur se trouve le plus souvent. La base de données DB est ainsi alimentée par apprentissage du geste de référence selon différents contextes de mobilité. Suite à la détermination du contexte de mobilité en E25, la base de connaissance DB est alimentée par les mesures inertielles obtenues pour ce contexte de mobilité déterminé. Ceci permet donc d'enrichir au fur et à mesure des gestes de référence effectués, la base de connaissance DB.

Cette information de contexte de mobilité est obtenue préalablement à toute action gestuelle effectuée sur le terminal et dans le même contexte. L'utilisateur fait donc dans un premier temps, le geste de référence afin de mettre en oeuvre le procédé selon l'invention. Le contexte de mobilité étant alors déterminé, l'utilisateur peut par exemple effectuer un geste déclenchant une action prédéterminée. Par exemple, s'il secoue son téléphone, cela entraine une lecture de musique de façon aléatoire. La détection de ce mouvement est alors effectuée avec la prise en compte du contexte de mobilité déterminée. Les mesures prise par les capteurs sont alors corrigées en conséquence pour prendre en compte le contexte de mobilité de façon à ce que la détection du geste de secousse soit interprétée correctement.

L'information de contexte de mobilité peut aussi être utilisée pour adapter l'interface du terminal au contexte de mobilité comme mentionné précédemment, l'interaction de l'utilisateur pouvant être différente.

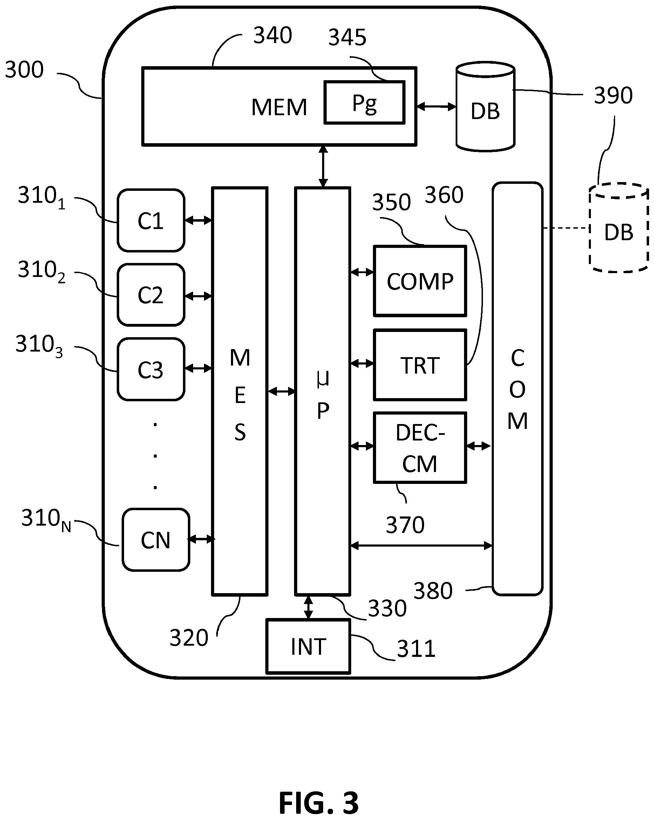

En relation avec la **figure 3**, on considère à présent une structure simplifiée d'un équipement 300 apte à mettre en oeuvre le procédé de détermination d'un contexte de mobilité tel que décrit en référence à la figure 2.

On notera que l'invention qui est décrite ici peut être mise en oeuvre au moyen de composants logiciels et/ou matériels. Dans cette optique, les termes « module » et « entité » utilisés dans ce document peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e). Cet équipement est équipé d'un module de collecte de mesures 320 apte à collecter les mesures de données inertielles capturées par les capteurs C1 à CN représentés ici en $310_1$, $310_2$, $310_3$ et $310_N$.

Par exemple, des capteurs de type accéléromètres sont prévus et sont aptes à mesurer l'accélération linéaire de l'équipement selon 3 axes orthogonaux. Un capteur de type gyroscope ou gyromètre peut également être prévu et est apte à mesurer des données de vitesse angulaire représentatives de rotations subies par l'équipement selon 3 axes, et un capteur de type magnétomètre est apte à déterminer l'orientation de l'équipement par rapport à un champ magnétique, et en particulier par rapport au champ magnétique terrestre.

En outre, l'équipement est muni d'une interface 311 qui peut être une interface tactile et qui est apte à détecter des gestes graphiques sur cette interface.

L'équipement comprend une unité de traitement 330 équipée d'un processeur et pilotée par un programme informatique Pg 345 stocké dans une mémoire 340 et mettant en oeuvre le procédé de détermination d'un contexte de mobilité selon l'invention.

A l'initialisation, les instructions de code du programme informatique Pg sont par exemple chargées dans une mémoire RAM non représentée et exécutées par le processeur de l'unité de traitement 330. Le processeur de l'unité de traitement 330 met en oeuvre les étapes du procédé de détermination d'un contexte de mobilité décrit précédemment, selon les instructions du programme informatique Pg.

Dans l'exemple de réalisation de l'invention considéré, l'équipement 300 comprend donc un module 320 de collecte de mesures de données inertielles issues des capteurs inertiels de l'équipement et prises lors de l'exécution d'un geste de référence avec l'équipement. Il comprend un module 350 de comparaison des données inertielles mesurées avec des données inertielles préenregistrées pour différents contextes de mobilité et pour ce geste de référence, un module de décision 370 pour déterminer le contexte de mobilité en fonction du résultat de la comparaison. Dans un mode de réalisation, l'équipement comprend également un module de traitement de signal 360 apte à effectuer les différents traitements sur données inertielles tels que ceux décrits en référence aux étapes $E22_1$ à $E22_8$ de la figure 2.

Dans un mode de réalisation, l'équipement comprend une base de données DB 390 comprenant une base de connaissance de données inertielles enregistrées par apprentissage pour différents contextes de mobilité et pour le geste de référence. Après la détermination d'un contexte de mobilité selon l'invention, cette base de données est enrichie par les données inertielles correspondantes à ce contexte de mobilité déterminé.

Dans un autre mode de réalisation, cette base de données est stockée sur un serveur distant accessible par un réseau de communication via un module de communication 380 de l'équipement. Le réseau de communication est par exemple un réseau IP.

L'équipement ainsi décrit est par exemple un terminal mobile de type téléphone intelligent, une tablette électronique, un agenda électronique, une montre, un bracelet ou tout type d'équipement électronique comportant des capteurs inertiels.

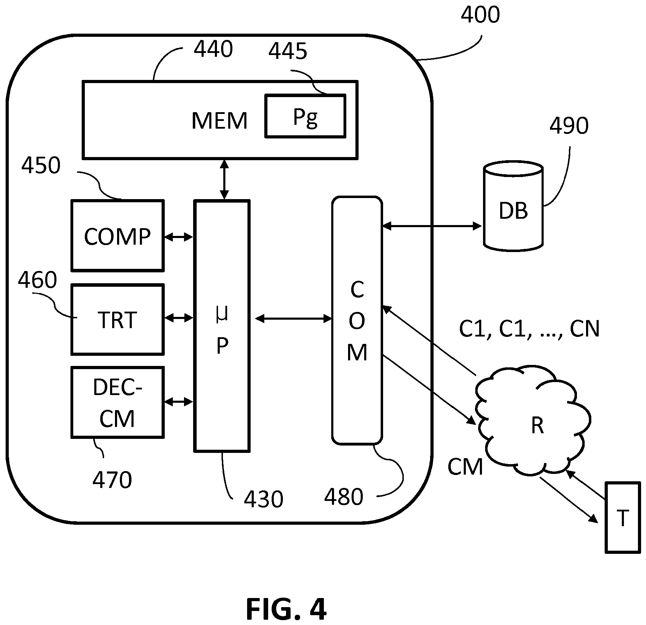

En relation avec la **figure 4**, on considère à présent une structure simplifiée d'un dispositif ou serveur 400 apte à mettre en oeuvre le procédé de détermination d'un contexte de mobilité tel que décrit en référence à la figure 2.

Le serveur comprend une unité de traitement 430 équipée d'un processeur et pilotée par un programme informatique Pg 445 stocké dans une mémoire 440 et mettant en oeuvre le procédé de détermination d'un contexte de mobilité selon l'invention.

A l'initialisation, les instructions de code du programme informatique Pg sont par exemple chargées dans une mémoire RAM non représentée et exécutées par le processeur de l'unité de traitement 430. Le processeur de l'unité de traitement 430 met en oeuvre les étapes du procédé de détermination d'un contexte de mobilité décrit précédemment, selon les instructions du programme informatique Pg.

Dans l'exemple de réalisation de l'invention considéré, le serveur 400 comprend un module 480 de réception de données inertielles issues des capteurs inertiels situés sur un équipement et prises lors de l'exécution d'un geste de référence avec l'équipement. Ce module de réception est ici illustré par un module de communication qui reçoit ces données de capteurs transmises par l'équipement T via un réseau de communication R.

Le serveur comprend également un module 450 de comparaison des données inertielles mesurées et reçues avec des données inertielles préenregistrées pour différents contextes de mobilité et pour ce geste de référence, un module de décision 470 pour déterminer le contexte de mobilité en fonction du résultat de la comparaison. Dans un mode de réalisation, le serveur comprend également un module de traitement de signal 460 apte à effectuer les différents traitements sur données inertielles tels que ceux décrits en référence aux étapes $E22_1$ à $E22_8$ de la figure 2.

Dans un mode de réalisation, le serveur comprend une base de données DB 490 comprenant une base de connaissance de données inertielles enregistrées par apprentissage pour différents contextes de mobilité et pour le geste de référence. Après la détermination d'un contexte de mobilité selon l'invention, cette base de données est enrichie par les données inertielles correspondantes à ce contexte de mobilité déterminé.

Dans un autre mode de réalisation, cette base de données est stockée sur un autre serveur distant accessible par un réseau de communication via le module de communication 480 du serveur. Le réseau de communication est par exemple un réseau IP.

Ce module de communication transmet le contexte de mobilité déterminé par le procédé mis en oeuvre, à l'équipement T d'où provient l'exécution du geste de référence.

Ce type de dispositif 400 peut être un serveur d'un réseau de communication ou bien un terminal de communication qui reçoit des données de capteurs d'un dispositif connecté T, par exemple une montre ou un bracelet, via un réseau R sans fil, par exemple de type Bluetooth ou Wifi.

Dans un exemple d'implémentation, un protocole expérimental est maintenant décrit pour mettre en oeuvre la détermination d'un contexte de mobilité d'un utilisateur porteur d'un téléphone muni de capteurs inertiels.

Dans cet exemple, nous utilisons les données d'un module accéléromètre-gyromètre InvenSense® MPU-6500. Les données de l'accéléromètre varient entre -2g et 2g et les données gyrométriques entre -1000 et +1000°/sec avec une période d'échantillonnage moyenne de 30 ms.

Nous considérons dans cet exemple, cinq contextes de mobilité : être assis, marcher, courir, monter des escaliers, descendre des escaliers. Le geste de référence est ici le geste symbolique « alpha ».

Pour constituer un panel représentatif des données, une personne réalise 40 instances du geste de référence dans les 5 contextes de mobilité. Ainsi, 20 instances de geste clef d'un même contexte de mobilité sont choisies aléatoirement parmi les 40 instances disponibles pour constituer une base dite d'apprentissage et 20 autres instances composent des exemples pour une base de test. Nous disposons donc dans cet exemple, de 100 instances de gestes pour apprendre les 5 contextes de mobilité et de 100 instances de gestes à classer. Dans l'exemple décrit ici, 10 expériences sont réalisées en mettant en oeuvre le procédé selon l'invention pour réaliser une validation croisée (i.e. évaluation par le taux moyen de bonne reconnaissance et par le meilleur taux de reconnaissance).

Une expérience correspond à 20 instances de geste à classer.

Selon l'implémentation décrite, toutes les données des instances de geste sont traitées par l'étape E22 décrite en référence à la Figure 2.

Soit $i \in \{0,...,I\}$, le nombre d'instances de gestes à traiter. L'étape E22 comprend une phase de calibration $E22_1$ des signaux d'entrée Ai(t) pour l'accéléromètre et Gi(t) pour le gyromètre. Soit $t \in \{0,...,T\}$ l'indice de temps pour le signal Ai(t) et $t' \in \{0,...,T'\}$ l'indice de temps pour le signal Gi(t').

Nous pouvons appliquer l'équation suivante pour obtenir le signal calibré $Ai_c(t)$ et $Gi_c(t')$ :

$$Ai_c(x,t) = (Ai(x,t) - A) * 1000 / B;$$

$$Ai_c(y,t) = (Ai(y,t) - C) * 1000 / D;$$

$$Ai_c(z,t) = (Ai(z,t) - E) * 1000 / F;$$

$$Gi_c(x,t') = (Gi(x,t') - A') * 1000 / B';$$

$$Gi_c(y,t') = (Gi(y,t') - C') * 1000 / D';$$

$$Gi_c(z,t') = (Gi(z,t') - E') * 1000 / F';$$

Avec A, B, C, D, E, F, A', B', C', D', E', F' des valeurs réelles de calibration.

L'étape E22 comprend une phase $E22_2$ de normalisation des signaux $Ai_c(t)$ et $Gi_c(t')$ pour donner les signaux normalisés $Ai_n(t)$ et $Gi_n(t')$ selon l'équation :

$$Ai_n(t) = (Ai_c(t) - \min_t (Ai_c(t))) / (\max_t (Ai_c(t)) - \min_t (Ai_c(t)));$$

$$Gi_n(t') = (Gi_c(t') - \min_{t'} (Gi_c(t'))) / (\max_{t'} (Gi_c(t')) - \min_{t'} (Gi_c(t')));$$

L'étape E22 comprend également une phase de filtrage $E22_3$ pour donner les signaux filtrés $Ai_f(t)$ et $Gi_f(t')$ selon l'équation :

$$Ai_f(t) = Ai_n(t)*H+Ai_n(t-1)*(1-H);$$

avec une valeur réelle.

$$Gi_f(t') = Gi_n(t')*H'+Gi_n(t'-1)*(1-H');$$

avec une valeur réelle.

L'étape E22 comprend une phase de vectorisation $E22_4$ pour créer les signaux $Ai_v(t)$ et $Gi_v(t')$ selon l'équation :

$$Si\ |Ai_f(t) - Ai_f(t+1) < 0.1|\ alors\ Ai_v(t) = Ai_f(t+1)$$

$$Si\ |Gi_f(t') - Gi_f(t'+1) < 0.1|\ alors\ Gi_v(t') = Gi_f(t'+1)$$

L'étape E22 comprend une phase de synchronisation $E22_5$ des signaux calibrés $Ai_v(t)$ et $Gi_v(t')$. Soit $k \in \{0,...,$ K\} l'indice de temps pour les nouveaux signaux synchronisé $Ai_s(k)$ et $Gi_s(k)$. Nous cherchons les valeurs manquantes selon l'équation :

$$Ai_s(k) = Ai_c(t) + (k-t)(Ai_c(t+1)- Ai_c(t));$$

$$Gi_s(k) = Gi_c(t') + (k-t')(Gi_c(t'+1)- Gi_c(t'));$$

Une étape $E22_6$ réalise la fusion des signaux $Ai_s(k)$ et $Gi_s(k)$ pour donner le signal Xi(k) en 6 dimensions par concaténation des valeurs x,y,z de chaque capteur dans le temps k. Les composantes de Xi(k) sont alors c1,c2,c3,c4,c5,c6 au cours du temps k.

L'étape E22 comprend une phase $E22_7$ de segmentation du début et fin de signal selon l'équation :

$$Xi_s(k) = Xi(k)\ si\ P > Z;$$

$$P = Xi(c1,k)^2 + Xi(c2,k)^2 + Xi(c3,k)^2 + Xi(c4,k)^2 + Xi(c5,k)^2 + Xi(c6,k)^2$$

avec Z une valeur réelle.

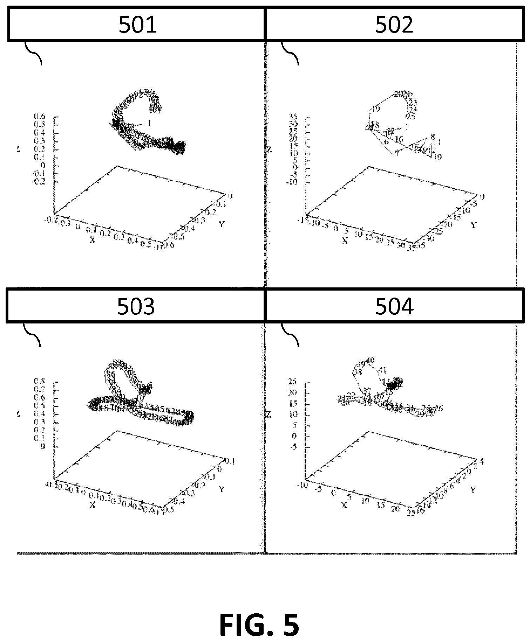

La figure 5, illustre une visualisation d'une instance de geste alpha avant et après traitement pour deux contextes différents de mobilité. Ainsi, l'illustration 501 représente la succession de points dans l'espace lors de l'instance du geste alpha dans un contexte où l'utilisateur court. L'illustration 502 représente cette même instance de geste après les étapes de traitement citées ci-dessus.

De même, l'illustration 503 représente la succession de points dans l'espace lors de l'instance du geste alpha dans un contexte où l'utilisateur est assis. L'illustration 504 représente cette même instance de geste après les étapes de traitement citées ci-dessus.

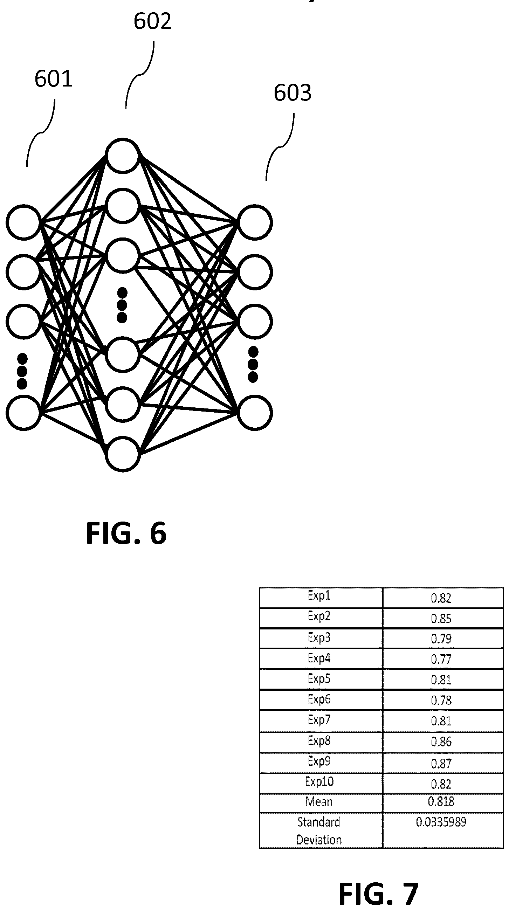

Pour l'apprentissage des fragments de gestes de référence décrivant les contextes de mobilité, issus d'une étape de fragmentation $E22_8$ en fragments d'égale longueur, un réseau de neurones siamois est constitué. Ce réseau est composé d'une couche de neurones d'entrée (601), une couche de neurones cachés (602) et une couche de neurones de sortie (603) illustré à la Figure 6. Nous choisissons une architecture 150;45 ;80 (respectivement le nombre de neurones d'entrée, cachés et de sortie). L'apprentissage des neurones du réseau siamois se fait par itération ou nombre d'époques. Dans un exemple d'implémentation ce nombre est 400. Ces itérations se font selon la méthode de « backpropagation » ou descente du gradient (le taux d'apprentissage est fixé à 0.0005) d'une fonction objective.

Ici la fonction objective est :

$$E_W (X1 , X2 , Y ) = (tX1X2 (Y) - \cos(O_{X1} , O_{X2} ))^2,$$

avec X1 et X2 deux exemples à apprendre et Y le label de ressemblance (tX1X2 (Y) = 1 pour la similarité 1 et -1 pour la dissimilarité), $O_{X1}$ et $O_{X2}$ les sorties du réseaux siamois pour les exemples X1 et X2.

Le réseau apprend sur les bases d'apprentissage la similarité de chaque fragment avec son équivalent (i.e. fragment de même indice) pour le même contexte et la dissimilarité de ce fragment avec les fragments de même indice pour tous les autres contextes.

Une fois, l'apprentissage fini, on classe les instances de gestes de référence comme suit. L'instance de test est traitée par l'étape E22, elle est subdivisée en 5 fragments. Chaque fragment est utilisé en entrée du réseau siamois avec un exemple de fragment d'apprentissage de même indice pour chaque classe. Une approche de type « plus proche voisin » est établie pour déterminer la contexte le plus proche pour ce fragment et une approche de type « vote majoritaire » établit la décision finale pour les 5 fragments.

Le tableau de la Figure 7 expose les résultats avec les taux de classifications pour les 10 expériences. Nous obtenons ainsi 81.80% de bonnes classifications moyennes (« Mean ») pour ce protocole expérimental avec un écart-type (« Standard Déviation ») réduit de 3.36%.

## Revendications

1. Procédé de détermination d'un contexte de mobilité d'un utilisateur porteur d'un équipement muni de capteurs inertiels, **caractérisé en ce qu'**il comporte les étapes suivantes :

   - mesure (E21) de données inertielles issues d'un ensemble de capteurs inertiels de l'équipement, prises lors de l'exécution d'un geste de référence avec l'équipement ;
   - comparaison (E23) des données inertielles mesurées avec des données inertielles préenregistrées pour différents contextes de mobilité et pour ce geste de référence ;
   - détermination (E25) du contexte de mobilité en fonction du résultat de la comparaison ;
   - adaptation de l'interface d'interaction utilisateur de l'équipement au contexte de mobilité déterminé pour recevoir les informations utilisateur vocalement en cas de mobilité forte ou textuellement dans le cas contraire.

2. Procédé selon la revendication 1, **caractérisé en ce que** la détermination du contexte de mobilité comporte la détermination d'un degré de mobilité.

3. Procédé selon la revendication 2, **caractérisé en ce qu'**une fragmentation est appliquée aux données inertielles mesurées pour obtenir une pluralité de signaux correspondants à différents degrés de mobilité à détecter.

4. Procédé selon l'une des revendications précédentes, **caractérisé en ce que** la détermination du contexte de mobilité est associé à une mesure de confiance de la décision.

5. Procédé selon l'une des revendications précédentes, **caractérisé en ce que** les données inertielles préenregistrées sont dans une base de connaissance alimentée par apprentissage du geste de référence selon différents contextes de mobilité et **en ce que** suite à la détermination du contexte de mobilité, la base de connaissance est alimentée par les mesures inertielles obtenues pour ce contexte de mobilité déterminé.

6. Equipement muni de capteurs inertiels apte à déterminer un contexte de mobilité d'un utilisateur porteur de l'équipement, **caractérisé en ce qu'**il comporte :

   - un module (320) de collecte de mesure de données inertielles issues d'un ensemble de capteurs inertiels de l'équipement, prises lors de l'exécution d'un geste de référence avec l'équipement ;
   - un module (350) de comparaison des données inertielles mesurées avec des données inertielles préenregistrées pour différents contextes de mobilité et pour ce geste de référence ;
   - un module (370) de décision pour déterminer le contexte de mobilité en fonction du résultat de la comparaison ;
   - un module d'adaptation apte à adapter l'interface d'interaction utilisateur de l'équipement au contexte de mobilité déterminé pour recevoir les informations utilisateur vocalement en cas de mobilité forte ou textuellement dans le cas contraire.

7. Terminal **caractérisé en ce qu'**il comporte un équipement selon la revendication 6.

8. Système de détermination d'un contexte de mobilité comportant un équipement (T) muni de capteurs inertiels et un dispositif de communication (400) apte à déterminer un contexte de mobilité d'un utilisateur porteur de l'équipement, **caractérisé en ce que** l'équipement comporte un module de collecte de mesure de données inertielles issues d'un ensemble de capteurs inertiels de l'équipement, prises lors de l'exécution d'un geste de référence avec l'équipement et un module d'envoi de ces données à un dispositif de communication et **en ce que** dispositif comporte :

- un module (480) de réception des données inertielles de l'équipement
- un module (450) de comparaison des données inertielles mesurées et reçues avec des données inertielles préenregistrées pour différents contextes de mobilité et pour ce geste de référence ;
- un module (470) de décision pour déterminer le contexte de mobilité en fonction du résultat de la comparaison et d'envoi de cette détermination à l'équipement ; ledit équipement comportant en outre un module d'adaptation apte à adapter l'interface d'interaction utilisateur de l'équipement au contexte de mobilité déterminé pour recevoir les informations utilisateur vocalement en cas de mobilité forte ou textuellement dans le cas contraire.

9. Programme informatique comportant des instructions de code pour la mise en oeuvre des étapes du procédé de détermination selon l'une des revendications 1 à 5, lorsque ces instructions sont exécutées par un processeur.

10. Support d'informations lisible par un processeur sur lequel est enregistré un programme informatique comprenant des instructions pour l'exécution par le processeur des étapes du procédé de détermination selon l'une des revendications 1 à 5.

**Patentansprüche**

1. Verfahren zur Bestimmung eines Mobilitätskontextes eines Nutzers, der ein Gerät trägt, das mit Trägheitssensoren ausgestattet ist, **dadurch gekennzeichnet, dass** es die folgenden Schritte umfasst:

- Messen (E21) von Trägheitsdaten, die aus einer Anordnung von Trägheitssensoren des Geräts stammen und die bei der Ausführung einer Referenzgeste mit dem Gerät erfasst werden;
- Vergleichen (E23) der gemessenen Trägheitsdaten mit vorab gespeicherten Trägheitsdaten für verschiedene Mobilitätskontexte und für diese Referenzgeste;
- Bestimmen (E25) des Mobilitätskontextes in Abhängigkeit vom Ergebnis des Vergleichs;
- Anpassen der Nutzerinteraktionsschnittstelle des Geräts an den bestimmten Mobilitätskontext, um die Nutzerinformationen im Fall starker Mobilität sprachlich oder im gegenteiligen Fall textlich zu empfangen.

2. Verfahren nach Anspruch 1, **dadurch gekennzeichnet, dass** die Bestimmung des Mobilitätskontextes die Bestimmung eines Mobilitätsgrades umfasst.

3. Verfahren nach Anspruch 2, **dadurch gekennzeichnet, dass** eine Fragmentierung auf die gemessenen Trägheitsdaten angewandt wird, um eine Mehrzahl von Signalen zu erhalten, die verschiedenen zu detektierenden Mobilitätsgraden entsprechen.

4. Verfahren nach einem der vorhergehenden Ansprüche, **dadurch gekennzeichnet, dass** die Bestimmung des Mobilitätskontextes einem Konfidenzmaß der Entscheidung zugeordnet wird.

5. Verfahren nach einem der vorhergehenden Ansprüche, **dadurch gekennzeichnet, dass** die vorab gespeicherten Trägheitsdaten in einer Wissensbasis sind, die durch Lernen der Referenzgeste gemäß verschiedenen Mobilitätskontexten gefüllt wird, und dadurch, dass nach der Bestimmung des Mobilitätskontextes die Wissensbasis mit den für diesen bestimmten Mobilitätskontext erhaltenen Trägheitsmessungen gefüllt wird.

6. Gerät, das mit Trägheitssensoren ausgestattet ist und geeignet ist, einen Mobilitätskontext eines das Gerät tragenden Nutzers zu bestimmen, **dadurch gekennzeichnet, dass** es umfasst:

- ein Modul (320) zum Sammeln von Messungen von Trägheitsdaten, die aus einer Anordnung von Trägheitssensoren des Geräts stammen und bei der Ausführung einer Referenzgeste mit dem Gerät erfasst werden;
- ein Modul (350) zum Vergleichen der gemessenen Trägheitsdaten mit vorab gespeicherten Trägheitsdaten für verschiedene Mobilitätskontexte und für diese Referenzgeste;
- ein Modul (370) zum Entscheiden, um den Mobilitätskontext in Abhängigkeit vom Ergebnis des Vergleichs zu bestimmen;
- ein Anpassungsmodul, das geeignet ist, die Nutzerinteraktionsschnittstelle des Geräts an den bestimmten Mobilitätskontext anzupassen, um die Nutzerinformationen im Fall starker Mobilität sprachlich oder im gegenteiligen Fall textlich zu empfangen.

**7.** Endgerät, **dadurch gekennzeichnet, dass** es ein Gerät nach Anspruch 6 umfasst.

**8.** System zur Bestimmung eines Mobilitätskontextes, das ein mit Trägheitssensoren ausgestattetes Gerät (T) und eine Kommunikationsvorrichtung (400) umfasst und geeignet ist, einen Mobilitätskontext eines das Gerät tragenden Nutzers zu bestimmen, **dadurch gekennzeichnet, dass** das Gerät ein Modul zum Sammeln von Messungen von Trägheitsdaten, die aus einer Anordnung von Trägheitssensoren des Geräts stammen und bei der Ausführung einer Referenzgeste mit dem Gerät erfasst werden, und ein Modul zum Senden dieser Daten an eine Kommunikationsvorrichtung umfasst, und dadurch, dass die Vorrichtung umfasst:

- ein Modul (480) zum Empfangen der Trägheitsdaten des Geräts
- ein Modul (450) zum Vergleichen der gemessenen und empfangenen Trägheitsdaten mit vorab gespeicherten Trägheitsdaten für verschiedene Mobilitätskontexte und für diese Referenzgeste;
- ein Modul (470) zum Entscheiden, um den Mobilitätskontext in Abhängigkeit vom Ergebnis des Vergleichs zu bestimmen, und zum Senden dieser Bestimmung an das Gerät;

wobei das Gerät ferner ein Anpassungsmodul umfasst, das geeignet ist, die Nutzerinteraktionsschnittstelle des Geräts an den bestimmten Mobilitätskontext anzupassen, um die Nutzerinformationen im Fall starker Mobilität sprachlich oder im gegenteiligen Fall textlich zu empfangen.

**9.** Computerprogramm, das Codeanweisungen umfasst, die bei der Ausführung dieser Anweisungen durch einen Prozessor die Schritte des Verfahrens zur Bestimmung nach einem der Ansprüche 1 bis 5 ausführen.

**10.** Prozessorlesbares Speichermedium, auf dem ein Computerprogramm gespeichert ist, das Anweisungen zur Ausführung der Schritte des Verfahrens zur Bestimmung nach einem der Ansprüche 1 bis 5 durch den Prozessor umfasst.

## Claims

**1.** Method for determining a mobility context of a user carrying an equipment provided with inertial sensors, **characterized in that** it comprises the following steps:

- measuring (E21) inertial data originating from a set of inertial sensors of the equipment, taken when a reference gesture is executed with the equipment;
- comparing (E23) the measured inertial data with prestored inertial data for various mobility contexts and for this reference gesture;
- determining (E25) the mobility context depending on the result of the comparison;
- adapting the user interaction interface of the equipment to the determined mobility context in order to receive the user information vocally in the event of high mobility or textually otherwise.

**2.** Method according to Claim 1, **characterized in that** determining the mobility context comprises determining a degree of mobility.

**3.** Method according to Claim 2, **characterized in that** fragmentation is applied to the measured inertial data in order to obtain a plurality of signals corresponding to different degrees of mobility to be detected.

**4.** Method according to one of the preceding claims, **characterized in that** the determination of the mobility context is associated with a confidence measure for the decision.

**5.** Method according to one of the preceding claims, **characterized in that** the prestored inertial data are in a knowledge base fed by learning the reference gesture according to various mobility contexts and **in that**, after the mobility context is determined, the knowledge base is fed by the inertial measurements obtained for this determined mobility context.

**6.** Equipment provided with inertial sensors which is able to determine a mobility context of a user carrying the equipment, **characterized in that** it comprises:

- a collection module (320) for measuring inertial data originating from a set of inertial sensors of the equipment, taken when a reference gesture is made with the equipment;
- a module (350) for comparing the measured inertial data with prestored inertial data for various mobility contexts and for this reference gesture;
- a decision module (370) for determining the mobility context depending on the result of the comparison;
- an adaptation module which is able to adapt the user interaction interface of the equipment to the determined mobility context in order to receive the user information vocally in the event of high mobility or textually otherwise.

**7.** Terminal **characterized in that** it comprises an equipment according to Claim 6.

**8.** System for determining a mobility context comprising an equipment (T) provided with inertial sensors and a communication device (400) which is able to determine a mobility context of a user carrying the equipment, **characterized in that** the equipment comprises a collection module for measuring inertial data originating from a set of inertial sensors of the equipment, taken when a reference gesture is made with the equipment, and a module for sending these data to a communication device, and **in that** the device comprises:

- a module (480) for receiving the inertial data from the equipment;
- a module (450) for comparing the measured and received inertial data with prestored inertial data for various mobility contexts and for this reference gesture;
- a decision module (470) for determining the mobility context depending on the result of the comparison and for sending this determination to the equipment;

said equipment further comprising an adaptation module which is able to adapt the user interaction interface of the equipment to the determined mobility context in order to receive the user information vocally in the event of high mobility or textually otherwise.

**9.** Computer program comprising code instructions for implementing the steps of the determination method according to one of Claims 1 to 5 when these instructions are executed by a processor.

**10.** Information medium which can be read by a processor on which a computer program comprising instructions for the processor to execute the steps of the determination method according to one of Claims 1 to 5 is stored.

**FIG. 1**

E20 — ATT-GST

E21 — MES. FT INERT

E22

E22₁ — CALIB
$E22_1$ — CALIB

E22₂ — NORM

E22₃ — FILT

E22₄ — VECT

E22₅ — SYNC

E22₆ — SOM

E22₇ — SEG

E22₈ — FRAG

DB — COMP- IC CM — E23

E24 — IC> S?

E25 — DEC CM

**FIG. 2**

**FIG. 3**

EP 3 252 563 B1

**FIG. 4**

**FIG. 5**

**FIG. 6**

| | |
|---|---|
| Exp1 | 0.82 |
| Exp2 | 0.85 |
| Exp3 | 0.79 |
| Exp4 | 0.77 |
| Exp5 | 0.81 |
| Exp6 | 0.78 |
| Exp7 | 0.81 |
| Exp8 | 0.86 |
| Exp9 | 0.87 |
| Exp10 | 0.82 |
| Mean | 0.818 |
| Standard Deviation | 0.0335989 |

**FIG. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090037849 A

**Littérature non-brevet citée dans la description**

- E-Gesture: A Collaborative Architecture for Energy-efficient Gesture Recognition with Hand-worn Sensor and Mobile Devices. **TAIWOO PARK et al.** ACM, CONFERENCE ON EMBEDDED NETWORKED SENSOR SYSTEMS, SENSYS. vol. 11, 260-273

- **RICHARD BELLMAN ; BELLA KOTKIN.** *On the Approximation Of Curves By Line Segments Using Dynamic Programming-II,* Février 1962
- **JANE BROMLEY ; ISABELLE GUYON ; YANN LECUN ; EDUARD SÄCKINGER ; ROOPAK SHAH.** Signature Vérification using a « Siamese » Time Delay Neural Network. *NIPS Proc,* 1994